# EUROPEAN PATENT SPECIFICATION

(11) **EP 2 299 522 B1**
(45) Date of publication and mention of the grant of the patent: **24.12.2014**
(21) Application number: 10250058.4
(22) Date of filing: 14.01.2010
(51) Int. Cl.: H01M 2/22, H01M 2/26, H01M 4/70, H01M 10/04, H01M 10/0587

(54) **Method of manufacturing electrode assembly for rechargeable battery**
Verfahren zur Herstellung einer Elektrodenanordnung für wiederaufladbare Batterie
Procédé de fabrication d'un ensemble d'électrode pour batterie rechargeable

(30) Priority: 18.09.2009 US 243908 P
(43) Date of publication of application: 23.03.2011
(73) Proprietor: Samsung SDI Co., Ltd., Gyeonggi-do (KR)
(72) Inventor: Sohn, Young-Bae, Yongin-si, Gyeonggi-do (KR)
(74) Representative: Mounteney, Simon James

(56) References cited:
- EP-A1- 1 339 115
- EP-A2- 1 207 565
- DE-A1- 10 341 355
- US-B1- 6 627 343

## Description

### BACKGROUND

### 1. Field

The present invention relates to a method of manufacturing an electrode assembly for a rechargeable battery, and more particularly, to a method of manufacturing an electrode assembly for a rechargeable battery, by which a plurality of tabs are easily formed.

### 2. Description of the Related Art

Unlike primary batteries which are not rechargeable, rechargeable batteries are chargeable and dischargeable. Rechargeable batteries are used in a wide range of applications including high-tech electronic devices, such as cellular phones, notebook computers, or camcorders, and automobiles.

Rechargeable batteries each include an electrode assembly and an electrolyte. The electrolyte usually includes lithium. The electrode assembly includes a negative electrode plate, a positive electrode plate, and a separator.

Each of the negative electrode plate and the positive electrode plate of the electrode assembly includes tabs protruding outside. That is, the tabs protrude outside the electrode assembly and are electrically connected to a container which houses the electrode assembly. The container may be a cylindrical can.

Each of the negative electrode plate and the positive electrode plate includes a plurality of electrode plates in order to perform charging and discharging with a high-capacity current. However, since the electrode assembly is formed by winding the negative electrode plate, the positive electrode plate, and the separator, it is not easy to form a plurality of tabs having a uniform width located at predetermined positions.

DE10341355 discloses a conductor contact section of a laminar electrical cell that comprises a continuous stack of plate electrode sheets in which the stack thickness of the contact section is less than that of the sheets as a whole.

EP 1 207 565 discloses a method of manufacturing an electrode assembly in which sub-portions are provided on electrode plates which, when the electrode plates are wound, overlap and form electrode tabs. The sub-portions have different widths, and in particular have an increasing width for the sub-portions which are located radially outwards in the rolled assembly.

### SUMMARY

The present invention sets out to solve the problem of providing tabs having uniform dimensions and good alignment.

Accordingly, the invention provides a method of manufacturing an electrode assembly for a rechargeable battery as set out in claim 1. Preferred features of the invention are set out in claims 2 to 10.

### BRIEF DESCRIPTION OF THE DRAWINGS

The nature of the invention will become apparent and more readily appreciated from the following description of the embodiments, taken in conjunction with the accompanying drawings of which:
FIG. 1 Is a schematic perspective view of an electrode assembly for a rechargeable battery, manufactured by using a method according to an embodiment of the present Invention;
FIGS. 2A through 2D are views to sequentially explain processes of the method described with reference to FIG. 1;
FIG. 3 is a schematic perspective view of an electrode assembly for a rechargeable battery, manufactured by using a method according to another embodiment of the present invention;
FIGS. 4A through 4C are views to sequentially explain processes of the method described with reference to FIG. 3;
FIG. 5 is a schematic perspective view of an electrode assembly for a rechargeable battery, manufactured by using a method according to another embodiment of the present invention;
FIGS. 6A through 6D are views to sequentially explain processes of the method described with reference to FIG. 5;
FIG. 7 is a schematic perspective view of an electrode assembly for a rechargeable battery, manufactured by using a method according to another embodiment of the present invention;
FIGS. 8A through 8D are views to sequentially explain processes of the method described with reference to FIG. 7;
FIG. 9 is a schematic perspective view of an electrode assembly for a rechargeable battery, manufactured by using a method according to another embodiment of the present invention; and
FIGS. 10A and 10B are views to explain processes of the method described with reference to FIG. 9.

### DETAILED DESCRIPTION

With reference to embodiments of the present invention illustrated in attached drawings, the structure and operation of the present invention will be described in detail.

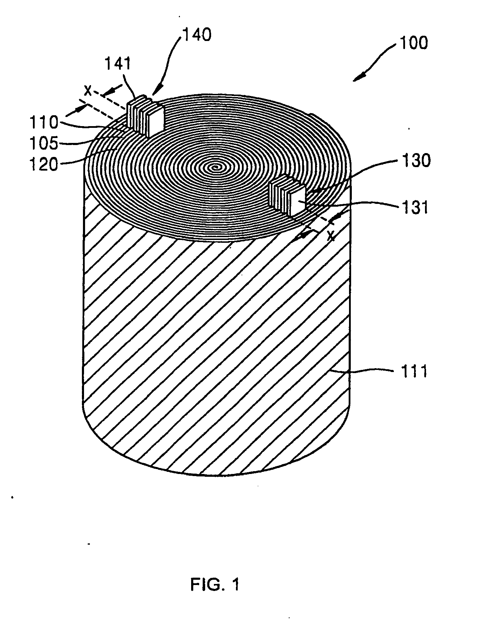

FIG. 1 is a schematic perspective view of an electrode assembly 100 for a rechargeable battery, manufactured by using a method according to an embodiment of the present invention.

Referring to FIG. 1, the electrode assembly 100 is manufactured by winding in such a manner that the electrode assembly 100 has a cylindrical shape. The electrode assembly 100 includes a separator 105, a first electrode plate 110, a second electrode plate 120, a first electrode tab group 130, and a second electrode tab group 140. The electrode assembly 100 is formed by winding the first electrode plate 110, the second electrode plate 120, and the separator 105, and the separator 105 is interposed between the first electrode plate 110 and the second electrode plate 120 in such a manner that the first electrode plate 110 is insulated from the second electrode plate 120. The separator 105 may include an insulating material.

The first electrode tab group 130 and the second electrode tab group 140 all are formed on the same side of the electrode assembly 100. In FIG. 1, the first electrode tab group 130 and the second electrode tab group 140 are formed on a top side of the electrode assembly 100.

The first electrode tab group 130 is connected to the first electrode plate 110, and the second electrode tab group 140 is connected to the second electrode plate 120. However, the present invention is not limited thereto. For example, the first electrode tab group 130 and the first electrode plate 110 may be integrally formed, and the second electrode tab group 140 and the second electrode plate 120 may be integrally formed.

The first electrode plate 110 may be a positive electrode plate, and the second electrode plate 120 may be a negative electrode plate. However, the present invention is not limited thereto and the polarity of the respective plates may be altered. To easily describe embodiments of the present invention presented in the present specification, the first electrode plate 110 is assumed to be a positive electrode plate, and the second electrode plate 120 is assumed to be a negative electrode plate.

The first electrode plate 110 may include a first active material portion 111 including a positive electrode active material. The second electrode plate 120 may include a second active material portion (not shown) including a negative electrode active material. Although the first active material portion 111 of the first electrode plate 110 is exposed outside in FIG. 1, the electrode assembly 100 may also be wound such that the second active material portion of the second electrode plate 120 is exposed outside.

The first electrode tab group 130 includes a plurality of first electrode tabs 131, and the second electrode tab group 140 includes a plurality of second electrode tabs 141.

The first electrode tabs 131 of the first electrode tab group 130 have substantially the same width X, and side surfaces of the first electrode tabs 131 are substantially parallel to each other.

The second electrode tabs 141 of the second electrode tab group 140 have substantially the same width X. The width X of the second electrode tabs 141 is identical to the width X of the first electrode tabs 131. However, according to another embodiment, the width of the second electrode tabs 141 may also be different from the width of the first electrode tabs 131. Side surfaces of the second electrode tabs 141 are substantially parallel to each other.

The cylindrical electrode assembly 100 is placed in a container such as a cylindrical can and then, an electrolyte is injected into the container and then, the container is sealed, thereby manufacturing a battery. In this regard, each of the first electrode tab group 130 and the second electrode tab group 140 includes a plurality of electrode tabs. Through the electrode tabs, the battery may be easily charged and discharged with a high-capacity current.

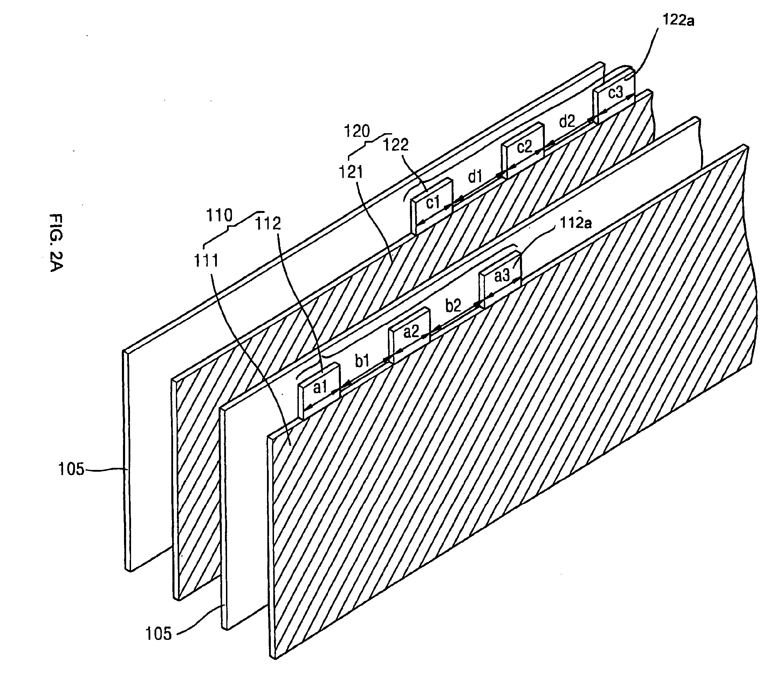

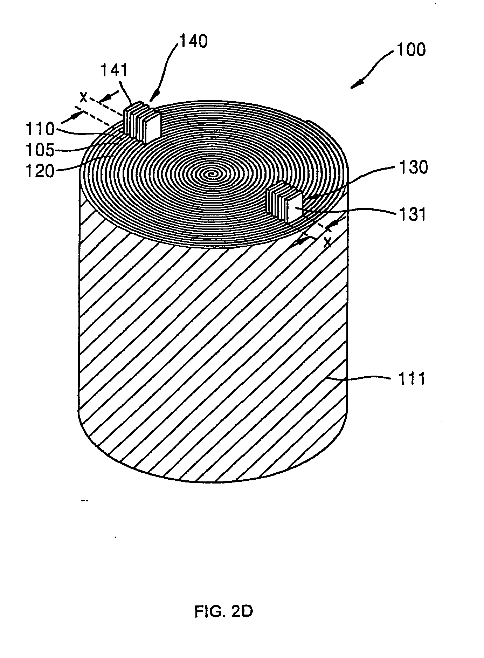

FIGS. 2A through 2D are views to sequentially explain processes of the method described with reference to FIG. 1.

Referring to FIG. 2A, the first electrode plate 110, the separator 105, and the second electrode plate 120 are prepared for stacking.

The first electrode plate 110 includes a first active material portion 111 which includes a positive electrode active material, and a of first un-coated portion 112 which does not include the positive electrode active material. The un-coated portion may be thought of as an inactive portion. For example, the first electrode plate 110 may be formed by coating a positive electrode active material on a predetermined portion of a metal thin plate such as an aluminum thin plate. In this regard, a portion which is coated with the positive electrode active material is referred to as the first active material portion 111, and a portion which is not coated is referred to as the first un-coated portion 112. The positive electrode active material may include, for example, a mixture including a lithium-based oxide, a binder, a plasticizer, and a conducting agent.

The first un-coated portion 112 comprises a plurality of sub-portions 112a that are aligned on a top side of the first active material portion 111 along the lengthwise direction of the first electrode plate 110, and have predetermined widths. The first sub-portions 112a have widths a1, a2, and a3, respectively, and they are spaced apart from each other by distances b1 and b2. In this embodiment, the widths a1, a2, and a3 of the first sub- portions 112a are substantially identical to each other, and the distances b1 and b2 between the first sub-portions 112a are also substantially identical to each other. Accordingly, the first electrode plate 110 may be easily manufactured. Although FIG. 2A illustrates three first sub-portions 112a, the number of the first sub-portions 112a may vary.

In the present embodiment, the first un-coated portion 112 and the first electrode plate 110 are integrally formed. However, the present invention is not limited thereto. For example, the first electrode plate 110 and the first un-coated portion 112 may be separately formed, and then, the first un-coated portion 112 may be connected to the first electrode plate 110. The connection method may vary, for example, a welding method may be used.

The second electrode plate 120 includes a second active material portion 121 which includes a negative electrode active material, and a second un-coated portion 122 which does not include the negative electrode active material. For example, the second electrode plate 120 may be formed by coating a negative electrode active material on a predetermined portion of a metal thin plate such as a copper thin plate or a nickel thin plate. In this regard, a portion which is coated with the negative electrode active material is referred to as the second active material portion 121, and a portion which is not coated is referred to as the second un-coated portion 122. The negative electrode active material may include, for example, a mixture including a carbonaceous material, a binder, a plasticizer, and a conducting agent.

The second un-coated portion 122 comprises a plurality of sub-portions 122a that are aligned on a top side of the second active material portion 121 along the lengthwise direction of the second electrode plate 120, and have predetermined widths. The second sub-portions 122a have widths c1, c2, and c3, and they are spaced apart from each other by distance d1 and d2. In this regard, the widths c1, c2, and c3 of the second sub-portions 122a are substantially identical to each other, and the distance d1 and d2 of the second sub-portions 122a are substantially identical to each other. Accordingly, the second electrode plate 120 may be easily manufactured. Although FIG. 2A illustrates three second sub-portions 122a, the number of second sub-portions 122a may vary.

In the present embodiment, the second un-coated portion 122 and the second electrode plate 120 may be integrally formed. However, the present invention is not limited thereto. For example, the second electrode plate 120 and the second un-coated portion 122 may be separately formed, and then the second un-coated portion 122 may be connected to the second electrode plate 120. The connection method may vary, for example, a welding method may be used.

The widths a1, a2, and a3 of the first sub-portions 112a are in this embodiment substantially identical to the widths c1, c2, and c3 of the second sub-portions 122a, and the distances b1 and b2 between the first sub-portions 112a are substantially identical to the distances d1 and d2 between the second sub-portions 122a. Thus, in the subsequent process, the first electrode tab group 130 and second electrode tab group 140 having the same widths may be easily manufactured. In this regard, since the first un-coated portion 112 and the second un-coated portion 122 respectively form the first electrode tab group 130 and the second electrode tab group 140 in the subsequent process and the first electrode tab group and the second electrode tab group have different polarity, the first un-coated portion 112 is required not to be electrically connected to the second un-coated portion 122.

Thus, the first un-coated portion 112 and the second un-coated portion 122 are disposed such that the first un-coated portion 112 does not overlap with and is spaced apart from the second un-coated portions 122 as far as possible after the winding. Accordingly, as illustrated in FIG. 2A, with reference to the lengthwise directions of the first electrode plate 110 and the second electrode plate 120, positions of the first un-coated portion 112 is different from position of the second un-coated portion 122.

When the first electrode plate 110 and the second electrode plate 120 are stacked and wound, a separator 105 is used to prevent the first electrode plate 110 and the second electrode plate 120 from being electrically connected to each other. The separator 105 may include any material that has excellent insulating characteristics and is flexible.

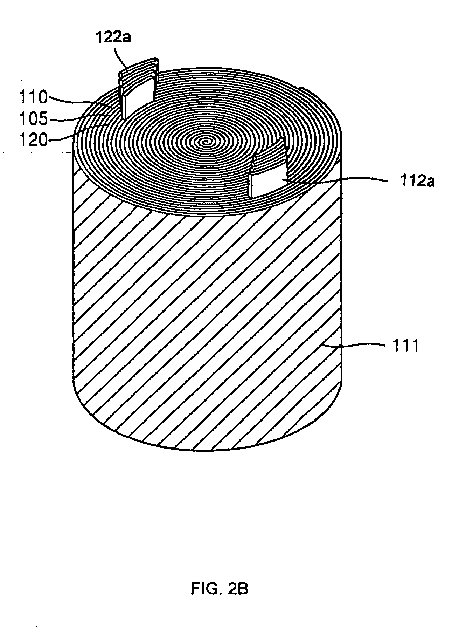

Referring to FIG. 2B, the first electrode plate 110, the second electrode plate 120, and the separator 105 are wound while the first electrode plate 110 is exposed outside, thereby exposing the first active material portion 111 of the first electrode plate 110. However, the present invention is not limited thereto. For example, the first electrode plate 110, the second electrode plate 120, and the separator 105 may be wound while the second electrode plate 120 is exposed outside, thereby exposing the second active material portion 121 of the second electrode plate 120.

After the electrode plates and separator have been wound together, the first sub-portions 112a may be misaligned. That is, side surfaces of the first sub-portions 112a may not be parallel to each other. Although the first sub-portions 112a have the same widths a1, a2, and a3, since the first sub-portions 112a are spaced apart from each other by distances b1 and b2 and the winding diameter changes when the first electrode plate 110 is wound, the first sub-portions 112a are misaligned.

In order to prevent misalignment of the first sub-portions 112a to obtain parallel side surfaces of the first sub-portions 112a, the distances b1 and b2 between the first sub-portions 112a need to be adjusted. The distances b1 and b2 of the first sub-portions 112a may be adjusted by considering the thickness of the first electrode plate 110, the thickness of the second electrode plate 120, and the thickness of the separator 105, which requires complicated calculation. In addition, even when the distances b1 and b2 between the first sub-portions 112 are adjusted by considering such factors, the first sub-portions 112a may still be misaligned due to the shape of the winding structure after winding and the winding density during winding.

However, according to the present invention, the positions of the first sub-portions 112a need not to be uniform. Thus, complicated calculations for adjusting of the distances b1 and b2 among the first sub-portions 112a are not required.

Likewise, side surfaces of the second sub-portions 122a may not be parallel to each other. Although the widths c1, c2, and c3 of the second sub-portions 122a are identical to each other, since the distances d1 and d2 of the second sub-portions 122a are identical to each other, first sub-portions 112 can be misaligned while the winding of the first electrode plate 110.

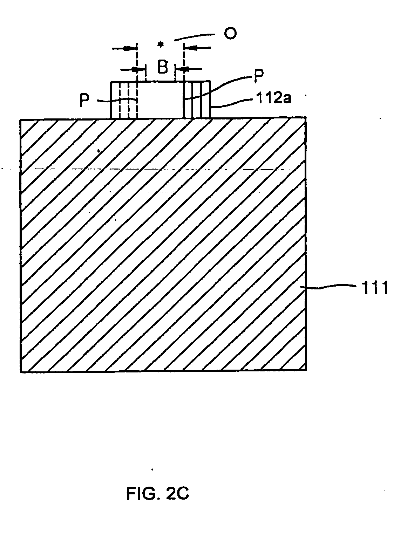

FIG. 2C is a front view of FIG. 2B. FIG. 2C illustrates the first sub-portions 112a and does not illustrate the second sub-portions 122a, to clearly describe the present embodiment. The dashed lines represent left side surfaces of the first sub-portions 112a which are shielded by a left side surface of the leftmost first sub-portion 112a.

Referring to FIG. 2C, the first sub-portions 112a are misaligned relative to each other, and only portions of the respective first un-coated portions 112 overlap with each other in a region O.

Like the first sub-portions 112a, the second sub-portions 122a (not shown in FIG. 2C) are also misaligned and only portions of the respective second sub-portions 122a overlap with each other in a region O.

To form the electrode tab portions of the first sub-portions 112a other than the overlapping portions are removed. To achieve this, material up to a boundary B located within the overlapping region O is removed. The boundary B corresponds to the intended width X of the tabs. In this embodiment B (and hence X) is narrower than region O. This provides manufacturing tolerance and allows for some variability in the size of the overlapping region during winding. However, in some embodiments the location of B may correspond with the perimeter of the overlap region O. In such a case the width X of the resulting tabs will be the same as that of the overlap region O.

Thus, the first electrode tab group 130 including the first electrode tabs 131 having a width X is formed. Likewise, portions of the second sub-portions 122a are removed in a similar manner. Thus, the second electrode tab group 140 including the second electrode tabs 141 having a width X is formed.

The process of removing predetermined portions of the first un-coated portion 112 and the second un-coated portion 122 may be a cutting process using a laser. However, the present invention is not limited. For example, a blanking process using a mold may also be used.

Thus, the electrode assembly 100 including the first electrode tab group 130 and the second electrode tab group 140 is manufactured.

The electrode assembly 100 includes the first electrode tabs 131 connected to the first electrode plate 110 and the second electrode tabs 141 connected to the second electrode plate 120. Even when distances among un-coated portions are not controlled when a plurality of tabs are formed, since portions of the un-coated portions are removed using, for example, a laser apparatus, the first electrode tab group 130 including the first electrode tabs 131 having the same width and parallel side surfaces may be easily formed. The second electrode tab group 140 may also be easily formed likewise.

In the present embodiment, the first un-coated portion 112 and the first electrode plate 110 are integrally formed, and thus, the first electrode tab group 130 and the first electrode plate 110 are integrally formed. Likewise, the second un-coated portion 122 and the second electrode plate 120 are integrally formed, and thus, the second electrode tab group 140 and the second electrode plate 120 are integrally formed. Alternatively, as described above, the first un-coated portion 112 and the first electrode plate 110 are separately formed and then, the first un-coated portion 112 is connected to the first electrode plate 110; and the second un-coated portions 122 and the second electrode plate 120 are separately formed and then, the second un-coated portion 122 is connected to the second electrode plate 120.

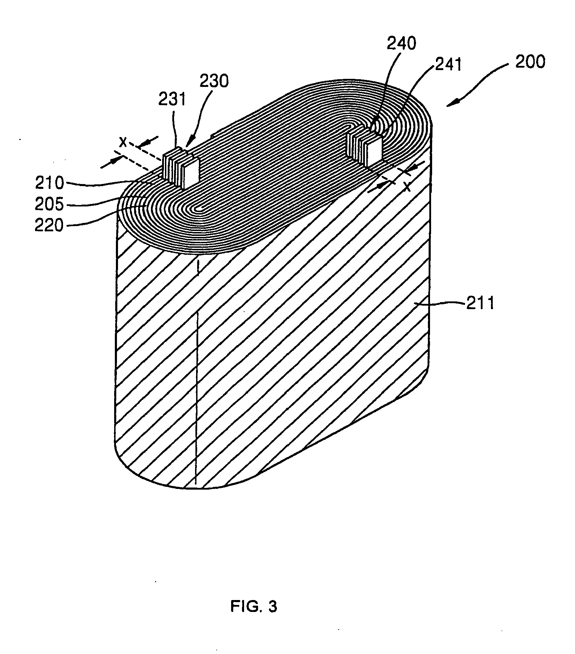

FIG. 3 is a schematic perspective view of an electrode assembly 200 for a rechargeable battery, manufactured by using a method according to another embodiment of the present invention.

Referring to FIG. 3, the electrode assembly 200 is manufactured by winding in such a manner that the electrode assembly 200 has flat side surfaces. The electrode assembly 200 includes a separator 205, a first electrode plate 210, a second electrode plate 220, a first electrode tab group 230, and a second electrode tab group 240.

The electrode assembly 200 according to the present embodiment is the same as the electrode assembly 100 of FIG. 1, except for the winding shape of the electrode assembly 200. Thus, elements of the electrode assembly 200 will not be described in detail.

The electrode assembly 200 illustrated in FIG. 3 is placed in a container such as a rectangular can or a pouch and then, an electrolyte is injected into the container and then, the container is sealed, thereby manufacturing a battery. In this regard, each of the first electrode tab group 230 and the second electrode tab group 240 includes a plurality of electrode tabs. Through the electrode tabs, the battery may be easily charged and discharged with a high-capacity current.

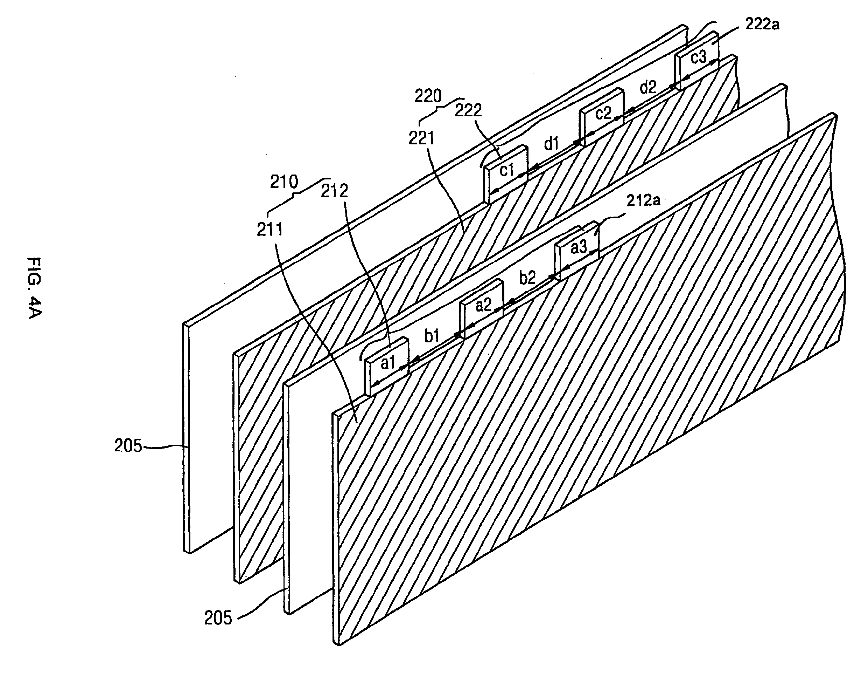

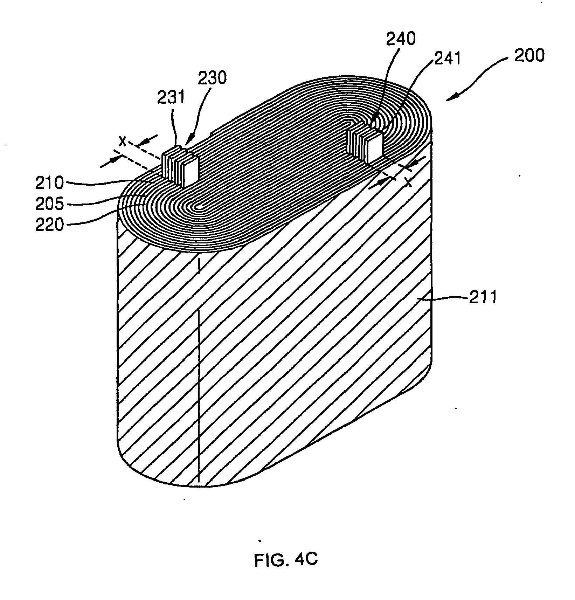

FIGS. 4A through 4D are views to sequentially explain processes of the method described with reference to FIG. 3.

Referring to FIG. 4A, the first electrode plate 210, the separator 205, and the second electrode plate 220 are prepared for stacking.

The first electrode plate 210, the separator 205, and the second electrode plate 220 respectively correspond to the first electrode plate 110, the separator 105, and the second electrode plate 120 which have been described in the previous embodiment and thus, the first electrode plate 210, the separator 205, and the second electrode plate 220 will not be described in detail in the present embodiment. Like in the electrode assembly 100 of the previous embodiment, the first electrode plate 210 and first un-coated portions 212 may be integrally formed, alternatively, the first un-coated portion 212 may be separately formed and then connected to the first electrode plate 210. Likewise, the second electrode plate 220 and the second un-coated portion 222 may be integrally formed, alternatively the second un-coated portions 222 may be separately formed and then connected to the second electrode plate 220.

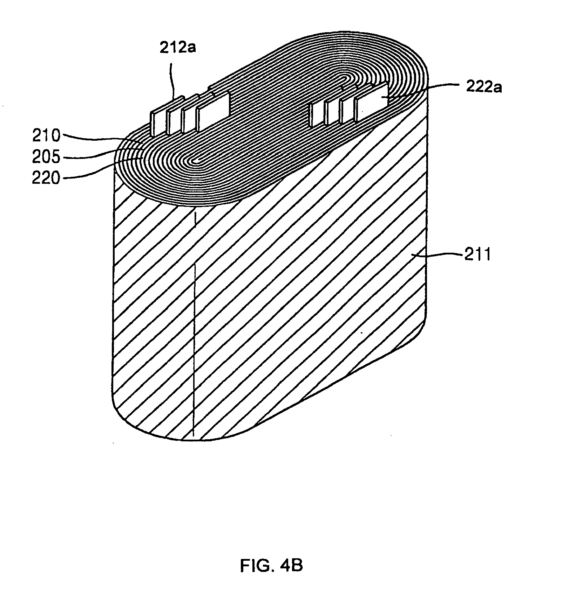

Referring to FIG. 4B, the stack including the first electrode plate 210, the second electrode plate 220, and the separator 205 is wound. In the present embodiment, in order to manufacture an electrode assembly for a rectangular or pouch type battery, the first electrode plate 210, the second electrode plate 220, and the separator 205 are stacked and then wound such that the stack structure has flat side surfaces.

Referring to FIG. 4B, the first electrode plate 210, the second electrode plate 220, and the separator 205 are wound while the first electrode plate 210 is exposed outside, thereby exposing a first active material portion 211 of the first electrode plate 210. However, the present invention is not limited thereto. For example, the first electrode plate 210, the second electrode plate 220, and the separator 205 may be wound while the second electrode plate 220 is exposed outside, thereby exposing a second active material portion 221 of the second electrode plate 220.

The first sub-portions 212a are misaligned. That is, side surfaces of the first un-coated portions 212 are not parallel to each other. Although the first sub-portions 212a have the same widths a1, a2, and a3, since the first sub-portions 212a are spaced apart from each other by the same distances b1 and b2 and the winding diameter changes when the first electrode plate 210 is wound, the first sub-portions 212a are misaligned.

Likewise, side surfaces of the second sub-portions 222a are not parallel to each other. Since the second sub-portions 222a have the same widths c1, c2, and c3 and the second sub-portions 222a are spaced apart from each other by the same distances d1 and d2, the second sub-portions 222a are misaligned when the second electrode plate 220 is wound.

To form the electrode tab groups 230 and 240, portions of the uncoated portions 212 and 222 are removed in a similar manner to the first embodiment.

The process of removing predetermined portions of the first un-coated portion 212 and the second un-coated portion 222 may be a cutting process using a laser. However, the present invention is not limited. For example, a blanking process using a mold may also be used.

Thus, the electrode assembly 200 including the first electrode tab group 230 and the second electrode tab group 240 is manufactured.

The electrode assembly 200 includes the first electrode tabs 231 connected to the first electrode plate 210 and the second electrode tabs 241 connected to the second electrode plate 220. Even when distances among un-coated portions are not controlled when a plurality of tabs are formed, since portions of the un-coated portions are removed using, for example, a laser apparatus, the first electrode tab group 230 including the first electrode tabs 231 having the same width and parallel side surfaces may be easily formed, and the second electrode tab group 240 may also be easily formed likewise.

In the present embodiment, the first un-coated portion 212 and the first electrode plate 210 are integrally formed, and thus, the first electrode tab group 230 and the first electrode plate 210 are integrally formed. Likewise, the second un-coated portion 222 and the second electrode plate 220 are integrally formed, and thus, the second electrode tab group 240 and the second electrode plate 220 are integrally formed. Alternatively, as described above, the first un-coated portion 212 and the first electrode plate 210 can be separately formed and then, the first un-coated portion 212 is connected to the first electrode plate 210; and the second un-coated portion 222 and the second electrode plate 220 can be separately formed and then, the second un-coated portion 222 is connected to the second electrode plate 220.

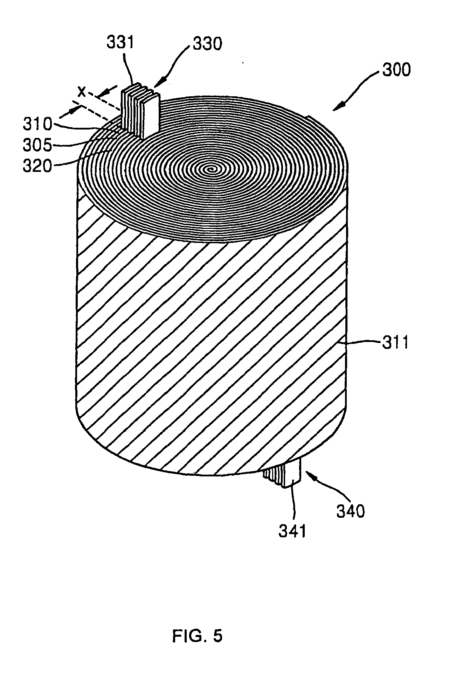

FIG. 5 is a schematic perspective view of an electrode assembly 300 for a rechargeable battery, manufactured by using a method according to another embodiment of the present invention.

Referring to FIG. 5, the electrode assembly 300 is manufactured by winding in such a manner that the electrode assembly 300 has a cylindrical shape. The electrode assembly 300 includes a separator 305, a first electrode plate 310, a second electrode plate 320, a first electrode tab group 330, and a second electrode tab group 340. For example, the electrode assembly 300 is formed by winding the first electrode plate 310, the second electrode plate 320, and the separator 305, and the separator 305 is interposed between the first electrode plate 310 and the second electrode plate 320 in such a manner that the first electrode plate 310 is insulated from the second electrode plate 320. The separator 305 may include an insulating material.

The first electrode tab group 330 is formed on a top side of the electrode assembly 300, and the second electrode tab group 340 is formed on a bottom side of the electrode assembly 300. However, the present invention is not limited thereto. For example, the first electrode tab group 330 may be formed on the bottom side of the electrode assembly 300, and the second electrode tab group 340 may be formed on the to top side of the electrode assembly 300. That is, the first electrode tab group 330 and the second electrode tab group 340 are formed on different sides of the electrode assembly 300.

The first electrode tab group 330 is connected to the first electrode plate 310, and the second electrode tab group 340 is connected to the second electrode plate 320. However, the present invention is not limited thereto. For example, the first electrode tab group 330 and the first electrode plate 310 may be integrally formed, and the second electrode tab group 340 and the second electrode plate 320 may be integrally formed.

The first electrode plate 310 may include a first active material portion 311 including a positive electrode active material. The second electrode plate 320 may include a second active material portion (not shown) including a negative electrode active material. Although the first active material portion 311 of the first electrode plate 310 is exposed outside in FIG. 5, the electrode assembly 300 may also be wound such that the second active material portion of the second electrode plate 320 is exposed outside.

The first electrode tab group 330 includes a plurality of first electrode tabs 331, and the second electrode tab group 340 includes a plurality of second electrode tabs 341.

The first electrode tabs 331 of the first electrode tab group 330 have substantially the same width X, and side surfaces of the first electrode tabs 331 are parallel to each other.

The second electrode tabs 341 of the second electrode tab group 340 have substantially the same width. The width of the second electrode tabs 341 is substantially identical to the width X of the first electrode tabs 331. However, according to another embodiment, the width of the second electrode tabs 341 may also be different from the width of the first electrode tab 331. Side surfaces of the second electrode tabs 341 may be parallel to each other.

The cylindrical electrode assembly 300 is placed in a container such as a cylindrical can and then, an electrolyte is injected into the container and then, the container is sealed, thereby manufacturing a battery. In this regard, each of the first electrode tab group 330 and the second electrode tab group 340 includes a plurality of electrode tabs. Through the electrode tabs, the battery may be easily charged and discharged with a high-capacity current.

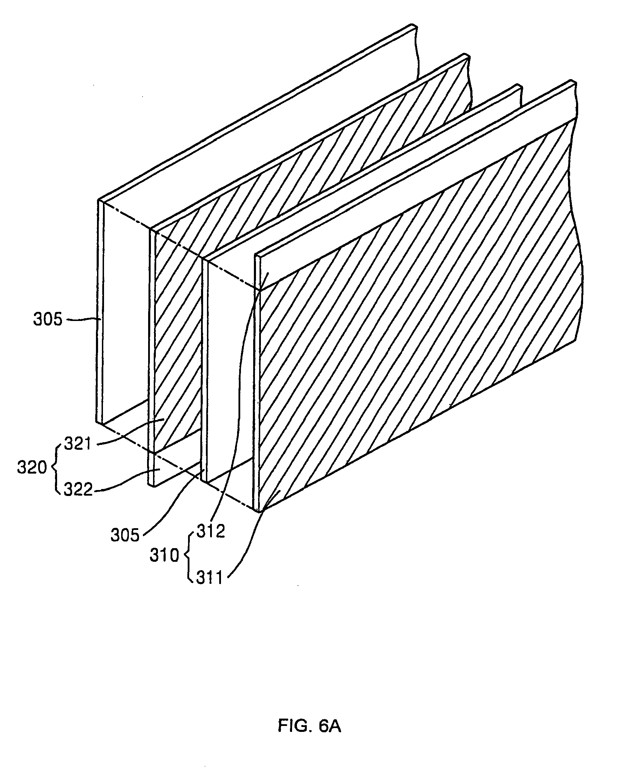

FIGS. 6A through 6D are views to sequentially explain processes of the method described with reference to FIG. 5.

Referring to FIG. 6A, the first electrode plate 310, the separator 305, and the second electrode plate 320 are prepared for stacking.

The first electrode plate 310 includes a first active material portion 311 which includes a positive electrode active material and a first un-coated portion 312 which do not include the positive electrode active material. For example, the first electrode plate 310 may be formed by coating a positive electrode active material on a predetermined portion of a metal thin plate such as an aluminum thin plate. In this regard, a portion which is coated with the positive electrode active material is referred to as the first active material portion 311, and a portion which is not coated is referred to as the first un-coated portion 312. The positive electrode active material may include, for example, a mixture including a lithium-based oxide, a binder, a plasticizer, and a conducting agent.

The first un-coated portion 312 is disposed on a top side of the first active material portion 311, has a predetermined height, extends in a lengthwise direction of the first electrode plate 310, and contacts a top surface of the first active material portion 311.

In the present embodiment, the first un-coated portion 312 and the first electrode plate 310 are integrally formed. However, the present invention is not limited thereto. For example, the first electrode plate 310 and the first un-coated portion 312 may be separately formed, and then, the first un-coated portion 312 may be connected to the first electrode plate 310. The connection method may vary, for example, a welding method may be used.

The second electrode plate 320 includes a second active material portion 321 which includes a negative electrode active material and a second un-coated portion 322 which does not include the negative electrode active material. For example, the second electrode plate 310 may be formed by coating a negative electrode active material on a predetermined portion of a metal thin plate such as a copper thin plate or a nickel thin plate. In this regard, a portion which is coated with the negative electrode active material is referred to as the second active material portion 321, and a portion which is not coated is referred to as the second un-coated portion 322. The negative electrode active material may include, for example, a mixture including a carbonaceous material, a binder, a plasticizer, and a conducting agent.

The second un-coated portion 322 is disposed on a bottom side of second active material portion 321, has a predetermined height, extends the lengthwise direction of the second electrode plate 320, and contacts a bottom surface of the second active material portion 321.

In the present embodiment, the second un-coated portion 322 and the second electrode plate 320 may be integrally formed. However, the present invention is not limited thereto. For example, the second electrode plate 320 and the second un-coated portion 322 may be separately formed, and then the second un-coated portion 322 may be connected to the second electrode plate 320. The connection method may vary, for example, a welding method may be used.

Referring to FIG. 6A, the first un-coated portion 312 contacts the top surface of the first active material portion 311 and the second un-coated portion 322 contacts of the bottom surface of the second active material portion 321. However, the present invention is not limited thereto. For example, the first un-coated portion 312 contacts a bottom surface of the first active material portion 311 and the second un-coated portion 322 contacts of a top surface of the second active material portion 321.

When the first electrode plate 310 and the second electrode plate 320 are stacked and wound, the separator 305 is used to prevent the first electrode plate 310 and the second electrode plate 320 from being electrically connected to each other. The separator 305 may include any material that has excellent insulating characteristics and is flexible.

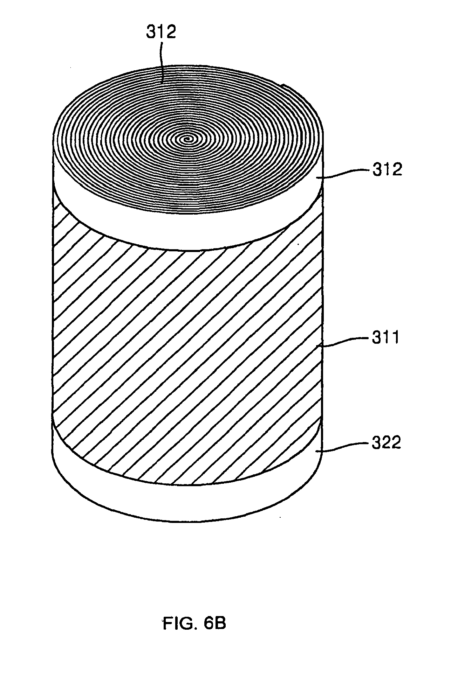

Referring to FIG. 6B, the stack including the first electrode plate 310, the second electrode plate 320 and the separator 305 is wound. Referring to FIG. 6B, the first electrode plate 310, the second electrode plate 320, and the separator 305 are wound while the first electrode plate 310 is exposed outside, thereby exposing the first active material portion 311 of the first electrode plate 310. However, the present invention is not limited thereto. For example, the first electrode plate 310, the second electrode plate 320, and the separator 305 may be wound while the second electrode plate 320 is exposed outside, thereby exposing the second active material portion 321 of the second electrode plate 320.

The first un-coated portion 312 is exposed on the top side of the first active material portion 311, and the second un-coated portion 322 is exposed on the bottom side of the second active material portion 321.

Then, the other portion of each of the first un-coated portion 312 and the second un-coated portion 322 other than a predetermined portion is removed to form electrode tabs.

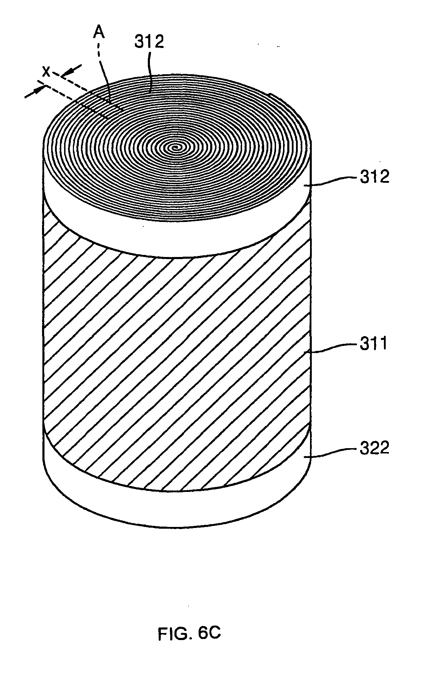

FIG. 6C schematically illustrates a portion of the first un-coated portion 312 which will be removed. Referring to FIG. 6C, a region A is defined by a dashed line. The region A has a width X. Since the width X corresponds to the width of the electrode tabs in the subsequent process, the width X of the region A may be determined according to a desired width of the electrode tabs. In addition, the width X of the region A may also be determined according to the number of electrode tabs of an electrode tab group.

Although not illustrated, a portion of the second un-coated portion 322 which will be removed is also be marked as described above. In order to obtain the electrode tabs having the same size, the second un-coated portion 322 may also have a region having the same size as the region A of the un-coated portion 312.

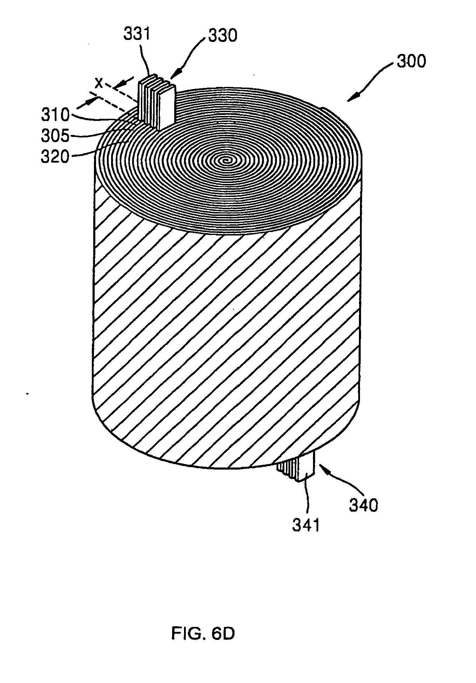

Then, referring to FIG. 6D, the other region of the first un-coated portion 312 other than the region A is removed. That is, only in the region A, the first un-coated portion 312 contacts the first active material portion 311. Thus, the first electrode tab group 330 having the first electrode tabs 331 having the same width X is formed.

Likewise, a predetermined portion of the second un-coated portion 322 is removed to form the second electrode tab group 340 including the second electrode tabs 341 having the same width. As described above, the other portion of the second un-coated portion 322 other than the region having the same size as the region A of the un-coated portion 312 is removed such that the second electrode tabs 341 have the same shape as the first electrode tab 331.

The process of removing predetermined portions of the first un-coated portions 312 and the second un-coated portions 322 may be a cutting process using a laser. However, the present invention is not limited. For example, a blanking process using a mold may also be used.

Thus, the electrode assembly 300 including the first electrode tab group 330 and the second electrode tab group 340 is manufactured.

The electrode assembly 300 includes the first electrode tabs 331 connected to the first electrode plate 310, and the second electrode tabs 341 connected to the second electrode plate 320. In the present embodiment, a plurality of tabs are formed by using an un-coated portion that extends along the length of the active material portion, instead of sub-portions that are patterned to be spaced apart from each other by predetermined distances. In addition, since the un-coated portion is removed while a predetermined portion of the un-coated portion remains, using, for example, a laser apparatus after winding, electrode tabs having a desired shape may be easily formed. For example, the first electrode tab group 330 having first electrode tabs 331 having the same width and parallel side surfaces may be easily formed, and the second electrode tab group 340 may also be easily formed likewise.

In the present embodiment, the first un-coated portion 312 and the first electrode plate 310 are integrally formed, and thus, the first electrode tab group 330 and the first electrode plate 310 are integrally formed. Likewise, the second un-coated portion 322 and the second electrode plate 320 are integrally formed, and thus, the second electrode tab group 340 and the second electrode plate 320 are integrally formed. Alternatively, as described above, the first un-coated portion 312 and the first electrode plate 310 are separately formed and then, the first un-coated portion 312 is connected to the first electrode plate 310; and the second un-coated portion 322 and the second electrode plate 320 are separately formed and then, the second un-coated portion 322 is connected to the second electrode plate 320.

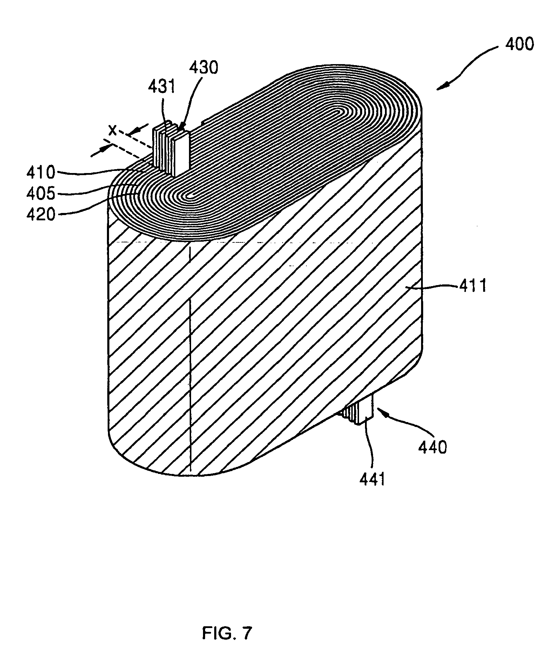

FIG. 7 is a schematic perspective view of an electrode assembly 400 for a rechargeable battery, manufactured by using a method according to another embodiment of the present invention.

Referring to FIG. 7, the electrode assembly 400 is manufactured by winding in such a manner that the electrode assembly 400 has flat side surfaces. The electrode assembly 400 according to the present embodiment is the same as the electrode assembly 300 of FIG. 5, except for the winding shape of the electrode assembly 400. Thus, elements of the electrode assembly 400 will not be described in detail.

The electrode assembly 400 illustrated in FIG. 7 is placed in a container such as a rectangular can or a pouch and then, an electrolyte is injected into the container and then, the container is sealed, thereby manufacturing a battery. In this regard, each of the first electrode tab group 430 and the second electrode tab group 440 includes a plurality of electrode tabs. Through the electrode tabs, the battery may be easily charged and discharged with a high-capacity current.

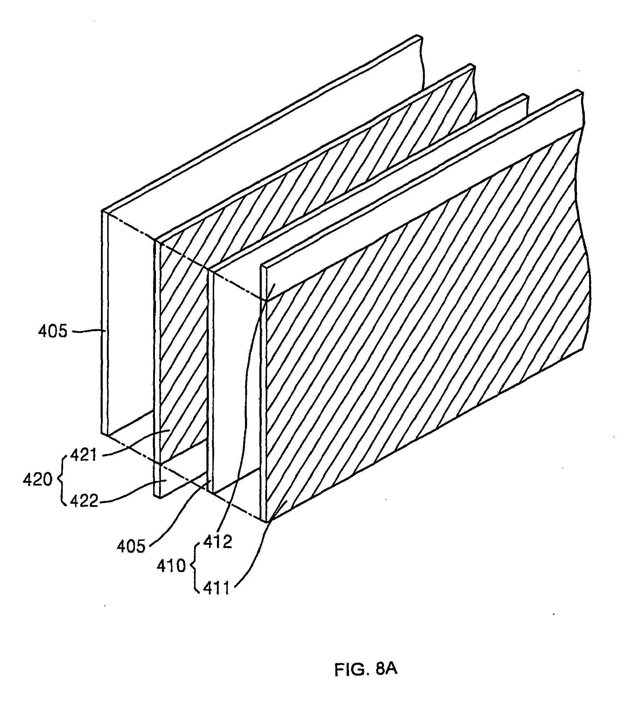

FIGS. 8A through 8D are views to sequentially explain processes of the method described with reference to FIG. 7.

Referring to FIG. 8A, the first electrode plate 410, the separator 405, and the second electrode plate 420 are prepared for stacking.

The first electrode plate 410, the separator 405, and the second electrode plate 420 respectively correspond to the first electrode plate 310, the separator 305, and the second electrode plate 320 which are illustrated in FIG. 3 and thus, the first electrode plate 410, the separator 405, and the second electrode plate 420 will not be described in detail in the present embodiment.

Like in the electrode assembly 300 according to the previous embodiment, the first electrode plate 410 and a first un-coated portion 412 are integrally formed, alternatively, the first un-coated portion 412 may be separately formed and then connected to the first electrode plate 410. Likewise, the second electrode plate 420 and a second un-coated portion 422 are integrally formed, alternatively the second un-coated portion 422 may be separately formed and then connected to the second electrode plate 420.

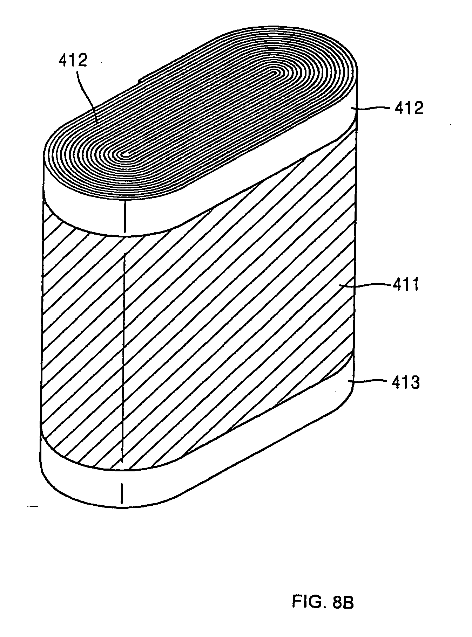

Then, referring to FIG. 8B, the stack including the first electrode plate 410, the second electrode plate 420, and the separator 405 is wound. Referring to FIG. 8B, the first electrode plate 410, the second electrode plate 420, and the separator 405 are wound while the first electrode plate 410 is exposed outside, thereby exposing the first active material portion 411 of the first electrode plate 410. However, the present invention is not limited thereto. For example, the first electrode plate 410, the second electrode plate 420, and the separator 405 may be wound while the second electrode plate 420 is exposed outside, thereby exposing the second active material portion 421 of the second electrode plate 420.

In the present embodiment, in order to manufacture an electrode assembly for a rectangular or pouch type battery, the first electrode plate 410, the second electrode plate 420, and the separator 405 are stacked and then wound such that the stack structure has flat side surfaces.

The first un-coated portion 412 is exposed on a top side of the first active material portion 411, and the second un-coated portion 422 is exposed on a bottom side of the second active material portion 421.

Then, the other region of each of the first un-coated portion 412 and the second un-coated portion 422 other than a predetermined region is removed, thereby forming electrode tabs.

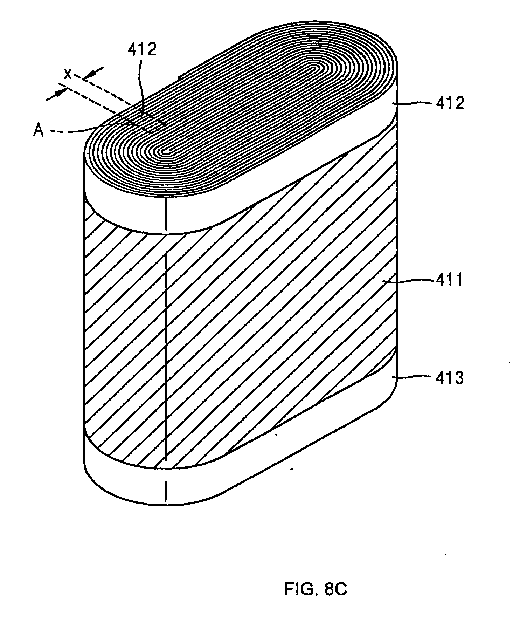

FIG. 8C schematically illustrates a portion of the first un-coated portion 412 which will be removed. Referring to FIG. 8C, a region A is defined by a dashed line. The region A has a width X. Since the width X corresponds to the width of the electrode tabs in the subsequent process, the width X of the region A may be determined according to a desired width of the electrode tabs. In addition, the width X of the region A may also be determined according to the number of electrode tabs of an electrode tab group.

Although not illustrated, a portion of the second un-coated portion 422 which will be removed is also be marked as described above. In order to obtain the electrode tabs having the same size, the second un-coated portion 422 may also have a region having the same size as the region A of the un-coated portion 412.

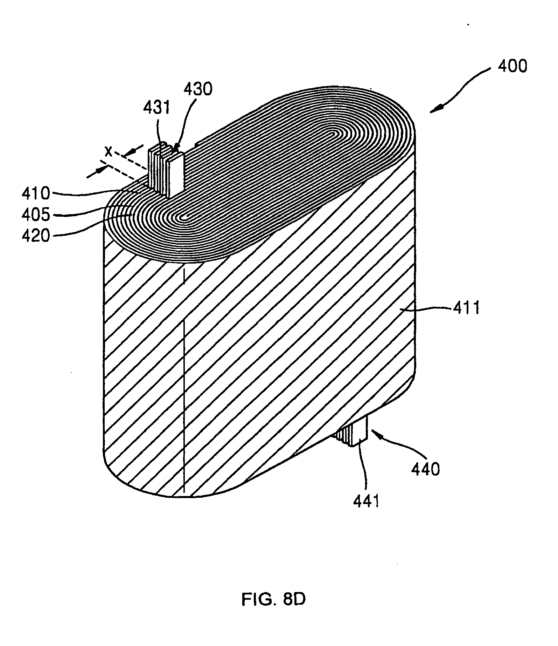

Then, referring to FIG. 8D, the other region of the first un-coated portion 412 other than the region A is removed. That is, only in the region A, the first un-coated portion 412 contacts the first active material portion 411. Thus, the first electrode tab group 430 having the first electrode tabs 431 having the same width X is formed.

Likewise, a predetermined portion of the second un-coated portion 422 is removed to form the second electrode tab group 440 including the second electrode tabs 441 having the same width. As described above, the other portion of the second un-coated portion 422 other than the region having the same size as the region A of the un-coated portion 412 is removed such that the second electrode tabs 441 have the same shape as the first electrode tabs 431.

Thus, the electrode assembly 400 including the first electrode tab group 430 and the second electrode tab group 440 is manufactured.

The electrode assembly 400 includes the first electrode tabs 431 connected to the first electrode plate 410, and the second electrode tabs 441 connected to the second electrode plate 420. In the present embodiment, a plurality of tabs are formed by using an un-coated portion that extends, instead of un-coated portions that are patterned to be spaced apart from each other by predetermined distances. In addition, since the un-coated portion is removed while a predetermined portion of the un-coated portion remains, using, for example, a laser apparatus after winding, electrode tabs having a desired shape may be easily formed. For example, the first electrode tab group 430 having first electrode tabs 431 having the same width and parallel side surfaces may be easily formed, and the second electrode tab group 440 may also be easily formed likewise.

In the present embodiment, the first un-coated portion 412 and the first electrode plate 410 are integrally formed, and thus, the first electrode tab group 430 and the first electrode plate 410 are integrally formed. Likewise, the second un-coated portion 422 and the second electrode plate 420 are integrally formed, and thus, the second electrode tab group 440 and the second electrode plate 420 are integrally formed. Alternatively, as described above, the first un-coated portion 412 and the first electrode plate 410 are separately formed and then, the first un-coated portion 412 is connected to the first electrode plate 410; and the second un-coated portion 422 and the second electrode plate 420 are separately formed and then, the second un-coated portion 422 is connected to the second electrode plate 420.

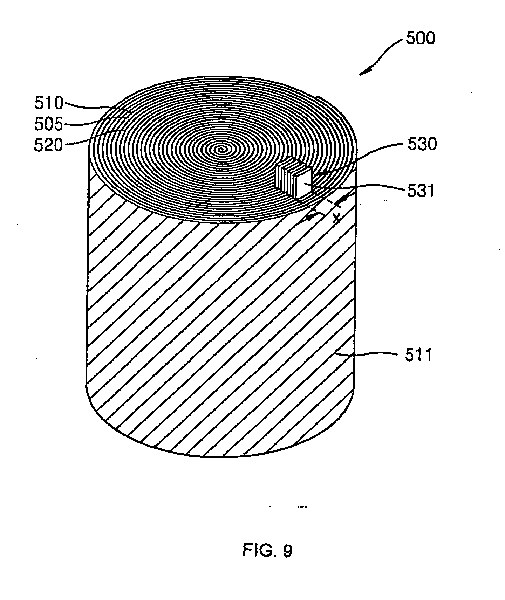

FIG. 9 shows an electrode assembly 500 manufactured in accordance with a further embodiment of the invention. This electrode assembly includes a tab group 530. This tab group can be formed using a process the same as that used to manufacture the tab group 130 in Figure 1, or the process used to manufacture the tab group 330 of Figure 5. Although the tab group is shown at the top of the electrode assembly, the methods may also be used to produce a tab group at the bottom of the electrode assembly. In addition, the inventive methods may be used to manufacture tab groups in electrode assemblies having other shapes, such as a flat cylinder of the kind shown in (for example) FIG. 3.

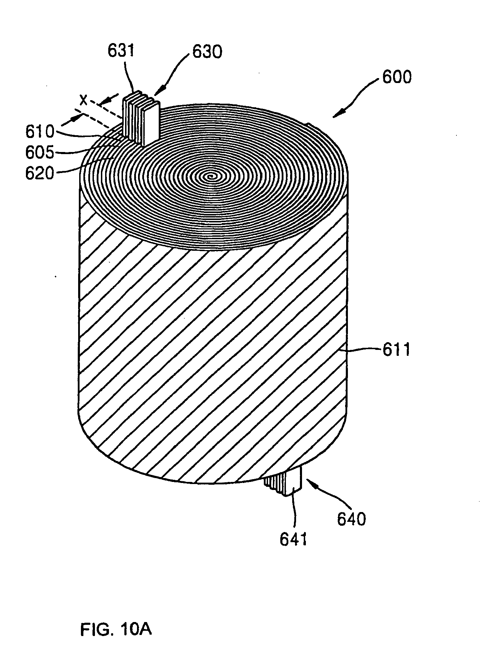

FIG. 10A shows a further electrode assembly 600 that has been manufactured in accordance with a further embodiment of the invention.

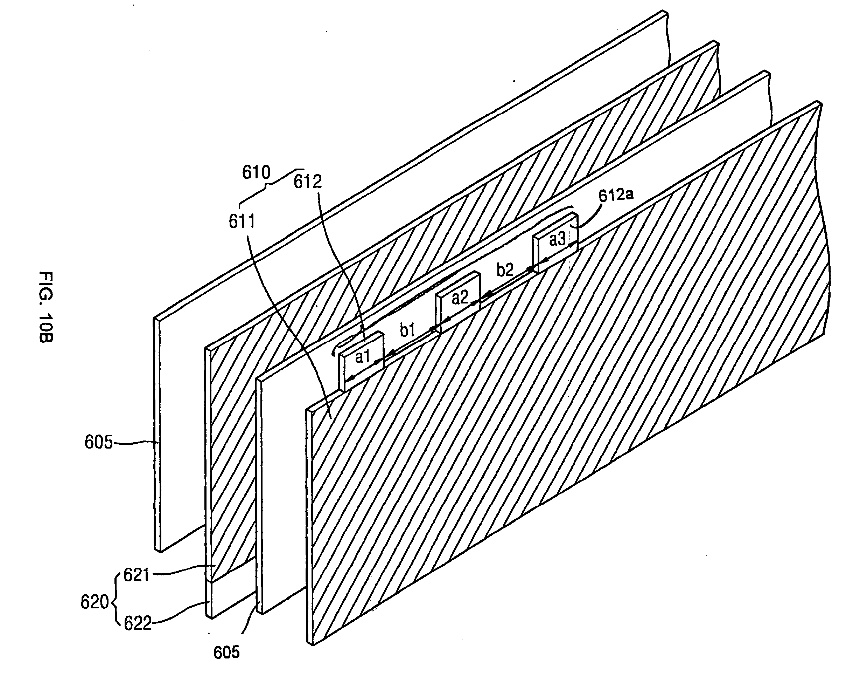

Referring to FIG. 10B, it will be seen that the assembly comprises first and second electrode plates 610, 620 and separators 605.

As in previous embodiments, the first and second electrode plates and the separators are wound together into a cylindrical formation.

As will be seen from FIG. 10B, the first electrode plate 610 comprises a first active material portion 611 and a first un-coated portion 612. The second electrode plate 610 comprises a second active material portion 621 and a second un-coated portion 622.

In this embodiment, the first un-coated portion 612 projects from the top of the first active material portion 611 and the second un-coated portion 622 projects from the bottom of the second active material portion 621. The relative positions of the two uncoated portions could, however, be reversed.

This embodiment differs from previous embodiments in that the first un-coated portion 612 is formed from a series of sub-portions 612a having a similar configuration to the first sub-portions 112a of the embodiment of FIG. 1. The second un-coated portion 622 has a structure similar to the un-coated 322 of the embodiment of FIG. 6A.

After the electrode plates and separators have been wound together, the first tab group 631 is formed using a process identical to that used for forming the tab group 131 in the embodiment of FIG.1. The tab group 641 is formed using a process identical to that used for forming the tab group 341 in the embodiment of FIG. 5.

In this embodiment, the un-coated portions 612 and 622 are integrally formed with their respective outer material portions 611 and 621. However, as in other embodiments, the uncoated portions may alternatively be connected to the coated portions using, for example, a welding method.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A method of manufacturing an electrode assembly (100, 200, 600) for a rechargeable battery comprising:
providing a first electrode plate (110, 210, 610), a second electrode plate (120, 220, 620), and a separator (105, 205, 605), wherein each electrode plate (110, 120, 210, 220, 610, 620) has a respective active portion (111, 121, 611, 621) and one of the electrode plates (110, 120, 210, 220, 610) has a first inactive portion (112, 122, 212, 222, 611) projecting from an edge region of its active portion (111, 121, 611);
arranging the separator (105, 205, 605) between the first electrode plate (110, 210, 610) and the second electrode plate (120, 220, 620);
winding the first electrode plate (110, 210, 610), the second electrode plate (120, 220, 620) and the separator (105, 205, 605) together; and
partially removing the first inactive portion (112, 122, 212, 222, 611) to form a plurality of first electrode tabs (131, 141, 231, 241, 631);
wherein at least one said inactive portion (112, 122, 212, 222, 611) comprises a group of sub-portions (112a, 122a, 212a, 222a, 612a);
**characterized in that** the respective sub-portions (112a, 122a, 212a, 222a, 612a) within the or each said group have substantially the same width and are substantially equally spaced from each other.

2. A method according to Claim 1, wherein the other of the electrode plates (110, 120, 210, 220) comprises a second Inactive portion (112, 122, 212, 222) projecting from an edge region of its active portion and, after the first electrode plate (110, 210), the second electrode plate (120, 220) and the separator (105, 205) have been wound together, the second inactive portion (112, 122, 212, 222) is partially removed to form a plurality of second electrode tabs (131, 141, 231, 241).

3. A method according to Claim 1 or 2, wherein the respective sub-portions (112a, 122a, 212a, 222a, 612a) within the or each said group radially overlap in a respective circumferential region after the electrode plates (110, 120, 210, 220) and separator (105, 205, 605) have been wound together.

4. A method according to Claim 3, wherein the sub-portions (112a, 122a, 212a, 222a, 612a) within the or each said group are removed up to a boundary falling within or at a perimeter of the respective circumferential region in which they overlap, so that the resulting electrode tabs (131, 141, 231, 241)are formed with side surfaces that are substantially parallel to each other In a radial direction.

5. A method according to any preceding claim, wherein at least one said inactive portion (112, 122, 212, 222, 611) is at least partially integral with the edge region from which it projects.

6. A method according to any preceding claim, wherein at least one said inactive portion (112, 122, 212, 222, 611) is at least partially joined to the edge region from which it projects.

7. A method according to Claim 2 or any claim dependent upon Claim 2, wherein the first and second electrode tabs (131, 141, 231, 241, 631) are all formed on the same end of the electrode assembly.

8. A method according to Claim 7, wherein the first electrode tabs and the second electrode tabs are positioned on opposite sides of the electrode assembly.

9. A method according to Claim 2, or one of Claims 3 to 6 when dependent upon Claim 2, wherein the first electrode tabs are formed on a top end of the electrode assembly and the second electrode tabs are formed on a bottom end of the electrode assembly.

10. A method according to Claim 2, one of Claims 3 to 6 when dependent upon Claim 2, or Claim 9, wherein the first electrode tabs or the second electrode tabs are formed in a central region of an end of the electrode assembly.

## Patentansprüche

1. Verfahren zur Herstellung einer Elektrodenanordnung (100, 200, 600) für eine wiederaufladbare Batterie, das die folgenden Schritte aufweist:
Bereitstellen einer ersten Elektrodenplatte (110, 210, 610), einer zweiten Elektrodenplatte (120, 220, 620) und eines Trennelementes (105, 205, 605), wobei eine jede Elektrodenplatte (110, 120, 210, 220, 610, 620) einen jeweiligen aktiven Abschnitt (111, 121, 611, 621) und eine der Elektrodenplatten (110, 120, 210, 220, 610) einen ersten inaktiven Abschnitt (112, 122, 212, 222, 611) aufweist, der aus einem Randabschnitt ihres aktiven Abschnittes (111, 121, 611) vorsteht;
Anordnen des Trennelementes (105, 205, 605) zwischen der ersten Elektrodenplatte (110, 210, 610) und der zweiten Elektrodenplatte (120, 220, 620);
Wickeln der ersten Elektrodenplatte (110, 210, 610), der zweiten Elektrodenplatte (120, 220, 620) und des Trennelementes (105, 205, 605) zusammen; und
teilweises Entfernen des ersten inaktiven Abschnittes (112, 122, 212, 222, 611), um eine Vielzahl von ersten Elektrodenkontaktnasen (131, 141, 231, 241, 631) zu bilden;
wobei mindestens ein inaktiver Abschnitt (112, 122, 212, 222, 611) eine Gruppe von Unterabschnitten (112a, 122a, 212a, 222a, 612a) aufweist;
**dadurch gekennzeichnet, dass** die jeweiligen Unterabschnitte (112a, 122a, 212a, 222a, 612a) innerhalb der oder einer jeden Gruppe im Wesentlichen die gleiche Breite aufweisen und im Wesentlichen gleich voneinander beabstandet sind.

2. Verfahren nach Anspruch 1, bei dem die andere der Elektrodenplatten (110, 120, 210, 220) einen zweiten inaktiven Abschnitt (112, 122, 212, 222) aufweist, der aus einem Randabschnitt ihres aktiven Abschnittes vorsteht, und wobei, nachdem die erste Elektrodenplatte (110, 210), die zweite Elektrodenplatte (120, 220) und das Trennelement (105, 205) zusammen gewickelt wurden, der zweite inaktive Abschnitt (112, 122, 212, 222) teilweise entfernt wird, um eine Vielzahl von zweiten Elektrodenkontaktnasen (131, 141, 231, 241) zu bilden.

3. Verfahren nach Anspruch 1 oder 2, bei dem sich die jeweiligen Unterabschnitte (112a, 122a, 212a, 222a, 612a) innerhalb der oder einer jeden Gruppe radial in einem jeweiligen Umfangsbereich überdecken, nachdem die Elektrodenplatten (110, 120, 210, 220) und das Trennelement (105, 205, 605) zusammen gewickelt wurden.

4. Verfahren nach Anspruch 3, bei dem die Unterabschnitte (112a, 122a, 212a, 222a, 612a) innerhalb der oder einer jeden Gruppe bis zu einer Grenze entfernt wurden, die innerhalb des oder auf einen Umfang des jeweiligen Umfangsbereiches fällt, in dem sie sich überdecken, so dass die resultierenden Elektrodenkontaktnasen (131, 141, 231, 241) mit Seitenflächen gebildet werden, die in einer radialen Richtung im Wesentlichen parallel zueinander sind.

5. Verfahren nach einem der vorhergehenden Ansprüche, bei dem mindestens ein inaktiver Abschnitt (112, 122, 212, 222, 611) mindestens teilweise mit dem Randbereich zusammenhängend ist, aus dem er vorsteht.

6. Verfahren nach einem der vorhergehenden Ansprüche, bei dem mindestens ein inaktiver Abschnitt (112, 122, 212, 222, 611) mindestens teilweise mit dem Randbereich verbunden ist, aus dem er vorsteht.

7. Verfahren nach Anspruch 2 oder einem Anspruch, der vom Anspruch 2 abhängig ist, bei dem die ersten und die zweiten Elektrodenkontaktnasen (131, 141, 231, 241, 631) alle am gleichen Ende der Elektrodenanordnung ausgebildet sind.

8. Verfahren nach Anspruch 7, bei dem die ersten Elektrodenkontaktnasen und die zweiten Elektrodenkontaktnasen auf entgegengesetzten Seiten der Elektrodenanordnung positioniert sind.

9. Verfahren nach Anspruch 2 oder einem der Ansprüche 3 bis 6, wenn sie vom Anspruch 2 abhängig sind, bei dem die ersten Elektrodenkontaktnasen an einem oberen Ende der Elektrodenanordnung und die zweiten Elektrodenkontaktnasen an einem unteren Ende der Elektrodenanordnung ausgebildet sind.

10. Verfahren nach Anspruch 2, einem der Ansprüche 3 bis 6, wenn sie vom Anspruch 2 abhängig sind, oder Anspruch 9, bei dem die ersten Elektrodenkontaktnasen oder die zweiten Elektrodenkontaktnasen in einem mittleren Bereich eines Endes der Elektrodenanordnung ausgebildet sind.

## Revendications

1. Procédé de fabrication d'un ensemble d'électrodes (100, 200, 600) pour batterie rechargeable comprenant :
la mise à disposition d'une première plaque servant d'électrode (110, 210, 610), d'une seconde plaque servant d'électrode (120, 220, 620) et d'un séparateur (105, 205, 605), chaque plaque servant d'électrode (110, 120, 210, 220, 610, 620) présentant une partie active (111, 121, 611, 621) respective et l'une des plaques servant d'électrodes (110, 120, 210, 220, 610) présentant une première partie inactive (112, 122, 212, 222, 611) faisant saillie à partir d'une zone de bord de sa partie active (111, 121, 611) ;
l'agencement du séparateur (105, 205, 605) entre la première plaque servant d'électrode (110, 210, 610) et la seconde plaque servant d'électrode (120, 220, 620) ;
l'enroulement de la première plaque servant d'électrode (110, 210, 610), de la seconde plaque servant d'électrode (120, 220, 620) et du séparateur (105, 205, 605) ensemble ; et
le retrait partiel de la première partie inactive (112, 122, 212, 222, 611) pour former une pluralité de premières languettes d'électrodes (131, 141, 231, 241, 631) ;
dans lequel au moins une desdites parties inactives (112, 122, 212, 222, 611) comprend un groupe de sous-parties (112a, 122a, 212a, 222a, 612a) ;
**caractérisé en ce que** les sous-parties (112a, 122a, 212a, 222a, 612a) respectives du ou desdits groupes ont sensiblement la même largeur et sont sensiblement équidistantes les unes des autres.

2. Procédé selon la revendication 1, dans lequel l'autre des plaques servant d'électrodes (110, 120, 210, 220) comprend une seconde partie inactive (112, 122, 212, 222) faisant saillie à partir d'une zone de bord de sa partie active et, après que la première plaque servant d'électrode (110, 210), la seconde plaque servant d'électrode (120, 220) et le séparateur (105, 205) ont été enroulés ensemble, la seconde partie inactive (112, 122, 212, 222) est partiellement retirée pour former une pluralité de secondes languettes d'électrodes (131, 141, 231, 241).

3. Procédé selon la revendication 1 ou 2, dans lequel les sous-parties (112a, 122a, 212a, 222a, 612a) respectives du ou desdits groupes se chevauchent radialement dans une zone circonférentielle respective après que les plaques servant d'électrodes (110, 120, 210, 220) et le séparateur (105, 205, 605) ont été enroulés ensemble.

4. Procédé selon la revendication 3, dans lequel les sous-parties (112a, 122a, 212a, 222a, 612a) du ou desdits groupes sont retirées jusqu'à une limite située dans ou sur un périmètre de la zone circonférentielle respective où elles se chevauchent, de manière que les languettes d'électrodes (131, 141, 231, 241) produites sont constituées avec des surfaces latérales qui sont sensiblement parallèles entre elles dans un sens radial.

5. Procédé selon l'une quelconque des revendications précédentes, dans lequel au moins une desdites parties inactives (112, 122, 212, 222, 611) est constituée au moins partiellement d'un seul tenant avec la zone de bord à partir de laquelle elle fait saillie.

6. Procédé selon l'une quelconque des revendications précédentes, dans lequel au moins une desdites parties inactives (112, 122, 212, 222, 611) est au moins partiellement jointe à la zone de bord à partir de laquelle elle fait saillie.

7. Procédé selon la revendication 2 ou toute revendication dépendant de la revendication 2, dans lequel les premières et secondes languettes d'électrodes (131, 141, 231, 241, 631) sont toutes constituées sur la même extrémité de l'ensemble d'électrodes.

8. Procédé selon la revendication 7, dans lequel les premières languettes d'électrodes et les secondes languettes d'électrodes sont disposées sur des côtés opposés de l'ensemble d'électrodes.

9. Procédé selon la revendication 2, ou l'une des revendications 3 à 6 lorsqu'elles dépendent de la revendication 2, dans lequel les premières languettes d'électrodes sont constituées sur une extrémité supérieure de l'ensemble d'électrodes et les secondes languettes d'électrodes sont constituées sur une extrémité inférieure de l'ensemble d'électrodes.

10. Procédé selon la revendication 2, l'une des revendications 3 à 6 lorsqu'elles dépendent de la revendication 2, ou selon la revendication 9, dans lequel les premières languettes d'électrodes ou les secondes languettes d'électrodes sont constituées dans une zone centrale d'une extrémité de l'ensemble d'électrodes.
